# EUROPEAN PATENT APPLICATION

(11) **EP 1 750 000 A2**
(43) Date of publication of application: **07.02.2007**
(21) Application number: 06016272.4
(22) Date of filing: 03.08.2006
(51) Int. Cl.: F02D 41/40, F02D 41/00

(54) **Fuel injection control system and method for a compression ignition internal combustion engine**

(30) Priority: 05.08.2005 JP 2005228044
(71) Applicant: TOYOTA JIDOSHA KABUSHIKI KAISHA, Toyota-shi, Aichi-ken 471-8571 (JP)
(72) Inventor: Ishiyama, Shinobu, Toyota-shi Aichi-ken 471-8571 (JP); Hattori, Fumiaki, Toyota-shi Aichi-ken 471-8571 (JP)
(74) Representative: Winter, Brandl, Fürniss, Hübner Röss, Kaiser, Polte Partnerschaft Patent- und Rechtsanwaltskanzlei

(57) **Abstract**

In a fuel injection control system and a fuel injection control method for a compression ignition internal combustion engine, if the load (Qe) upon the compression ignition internal combustion engine is less than or equal to a predetermined load (Q0), then, along with increasing (S102) the remaining gas amount, the number of times secondary fuel injection is performed in a single combustion cycle is decreased (S103), as compared with when the load (Qe) upon the compression ignition internal combustion engine is higher than the predetermined load (Q0). Thus, it becomes possible to stabilize the combustion state of fuel in the combustion chamber as much as practicable.

## Description

### BACKGROUND OF THE INVENTION

### 1. Field of the Invention

The present invention relates to a fuel injection control system for a compression ignition internal combustion engine, and to a fuel injection control method for the same.

### 2. Description of the Related Art

Recently, with compression ignition internal combustion engines, there has been a tendency to strive for lower compression ratio, in order to obtain higher power output. However there is a fear of the ignition delay time period becoming too long, since the temperature in the combustion chamber decreases when the compression ratio is decreased. As a result, this sometimes invites deterioration of combustion noise or of exhaust emissions.

Thus, in a fuel injection control system for a compression ignition internal combustion engine, there is a known technique (for example, refer to Japanese Patent Application Publication JP-A-2003-269229) of performing secondary fuel injection a plurality of times, before the timing at which the main fuel injection is performed.

With a compression ignition internal combustion engine, if secondary fuel injection is performed at a timing at which this fuel which has been injected combusts in the combustion chamber at a timing before the main fuel injection is performed, it is possible further to elevate the temperature in the combustion chamber. By doing this, it is possible to prevent the ignition delay time period from becoming too long.

However, when the number of times during a single combustion cycle at which secondary fuel is thus injected is increased, since the interval between performing these secondary fuel injections becomes short, the influence of pulsation of the fuel pressure during the injection of secondary fuel becomes great. As a result, sometimes it is difficult to control the amount of secondary fuel which is injected with good accuracy. Moreover, if the amount of secondary fuel which is injected becomes unstable, there is a fear that the state of combustion within the combustion chamber will also become unstable.

### SUMMARY OF THE INVENTION

The present invention has been conceived in the light of the problem described above, and it is a fuel injection control system for a compression ignition internal combustion engine, and a fuel injection control method therefor, which address the problem of supplying a technique which can stabilize the state of combustion of fuel within the combustion chamber to the greatest possible extent.

And the present invention is a technique which, for a compression ignition internal combustion engine, elevates the temperature within the combustion chamber to a temperature which makes it possible to prevent the ignition time period from becoming too long, while keeping down the number of times that secondary fuel injection is performed within a single combustion cycle.

In more detail, the fuel injection control system for a compression ignition internal combustion engine according to the present invention performs, using a fuel injection valve which injects fuel directly into a combustion chamber, main fuel injection, and secondary fuel injection, which is performed before the main fuel injection is performed and at a timing at which fuel of the secondary fuel injection will burn in the combustion chamber; and includes a residual gas amount control means which controls the amount of residual gas which remains within the cylinder after fuel combustion, and wherein the residual gas amount control means: if the load upon the compression ignition internal combustion engine is less than or equal to a predetermined load, then, along with increasing the remaining gas amount, decreases the number of times secondary fuel injection is performed in a single combustion cycle, as compared with when the load upon the compression ignition internal combustion engine is higher than the predetermined load.

Furthermore, according to another aspect of the present invention, there is provided a fuel injection control method for a compression ignition internal combustion engine which performs, using a fuel injection valve which injects fuel directly into a combustion chamber, main fuel injection, and secondary fuel injection, which is performed before the main fuel injection is performed and at a timing at which fuel of the secondary fuel injection will burn in the combustion chamber. In this fuel injection control method, if the load upon the compression ignition internal combustion engine is less than or equal to a predetermined load, then, along with increasing the remaining gas amount which remains within the cylinder after fuel combustion, the number of times secondary fuel injection is performed in a single combustion cycle is decreased, as compared with when the load upon the compression ignition internal combustion engine is higher than the predetermined load.

With the present invention, since the amount of residual gas is controlled, it is possible to elevate the temperature of the combustion chamber by increasing this amount of residual gas, because the temperature of this residual gas is high as compared with the temperature of the inhaled air.

Thus, according to the fuel injection control system and the fuel injection control method for a compression ignition internal combustion engine as described above, if the load upon the compression ignition internal combustion engine (hereinafter simply termed the "engine load") is less than or equal to the predetermined load, the amount of residual gas is increased, and moreover the number of times that secondary fuel injection is performed in a single combustion cycle is decreased, as compared with when the load upon the compression ignition internal combustion engine is higher than the predetermined load.

By increasing the amount of the residual gas, it becomes possible to elevate the temperature within the combustion chamber to a temperature at which it is possible to prevent the ignition delay time period from becoming too long, even though the number of times secondary fuel injection is performed in a single combustion cycle is decreased. Moreover, by decreasing the number of times secondary fuel injection is performed in a single combustion cycle, it becomes possible to control the secondary fuel injection amount with good accuracy, since it is possible to lengthen the interval between performing the injections of secondary fuel.

Accordingly, it is possible to stabilize the state of fuel combustion in the combustion chamber as much as practicable. Furthermore, by increasing the amount of the residual gas, it is possible to suppress the amount of NOx which is generated to the maximum possible extent.

It should be understood that, when the engine load becomes quite high, if the amount of residual gas is increased, it becomes easy to invite excessive rise in the temperature of the combustion chamber. Thus, the predetermined load according to the present invention is set to a value which is less than or equal to the threshold value of the load for which it is possible to decide that it is possible to increase the amount of residual gas, to an extent that it is possible to elevate the temperature in the combustion chamber to a temperature at which it is possible to prevent the ignition delay time period becoming too long, even if the number of times that secondary fuel injection is performed during a single combustion cycle is decreased.

Furthermore, it is also appropriate to increase the amount of the residual gas by, when the load upon the compression ignition internal combustion engine is less than or equal to the predetermined load, along with advancing the timing of the closing of the exhaust valve, also delaying the timing of the opening of the intake valve, as compared with when the load upon the compression ignition internal combustion engine is higher than the predetermined load.

By adjusting the valve timing in this manner, it is possible to increase the amount of the residual gas and thus elevate the temperature in the combustion chamber, so that, even if the number of times secondary fuel injection is performed within a single combustion cycle is decreased, still it is possible to prevent the ignition delay time period from becoming long.

Furthermore, when the engine load is higher than the predetermined load, it is appropriate to decrease the fuel injection pressure when performing the main fuel injection, as compared to when the engine load is less than or equal to the predetermined load. Or, when the engine load is higher than the predetermined load, it is appropriate to increase the fuel injection amount each time secondary fuel injection is performed, as compared to when the engine load is less than or equal to the predetermined load.

When the engine load is quite high, the fuel which is injected from the fuel injection valve more easily can become atomized, as compared to when the engine load is low, even if the fuel is not formed into minute droplets, since the temperature of the combustion chamber is elevated. Accordingly, it is possible to prevent the ignition delay time period from becoming long, even if the fuel injection pressure when performing the main fuel injection is decreased. Due to this, it is possible to prevent the ignition delay time period from becoming too long, even if the temperature of the combustion chamber is decreased by decreasing the number of times that secondary fuel injection is performed for each single combustion cycle. Moreover, it is possible to lengthen the injection period when the fuel injection pressure when performing the main fuel injection is decreased, in other words, it is possible to reduce the amount of fuel injection per unit time. By doing this, it becomes possible to reduce the noise of combustion.

Furthermore, by doing as described above, it is possible to suppress increase of the combustion noise, even if the amount of fuel injection per single episode of secondary fuel injection is increased. Moreover, by increasing the amount of fuel injection per single episode of secondary fuel injection, it is possible to prevent decrease of the temperature in the combustion chamber, even if the number of times that secondary fuel injection is performed during a single combustion cycle is reduced. Due to this, it is possible to prevent the ignition time period from becoming too long in this manner as well.

In other words, according to the above described type of control, even if the engine load is higher than the predetermined load, it is possible to reduce the number of times that the secondary fuel injection is performed during a single combustion cycle to the greatest practicable extent, along with preventing the ignition delay time period from becoming too long. As a result, it is possible to stabilize the combustion state of fuel within the combustion chamber to the maximum possible extent.

Furthermore it is also appropriate, when the temperature of the compression ignition internal combustion engine (hereinafter termed the "engine temperature") is less than or equal to a predetermined temperature, to set the predetermined load to a higher value, as compared to when the engine temperature is higher than that predetermined temperature.

When the engine temperature is low, it becomes more difficult to invite excessive increase of the temperature within the combustion chamber by increasing the amount of the residual gas. Due to this, if the engine temperature is quite low, it is easy to increase the amount of the residual gas, even if the engine load is higher. In other words, it becomes possible to set the predetermined load to a higher value.

According to the above, the amount of residual gas comes to be increased in the region in which the engine load is higher as well. Due to this, it is possible further to suppress the amount of NOx which is generated.

With the present invention, it is also appropriate to decrease an effective compression ratio of the compression ignition internal combustion engine, according to increase of the engine load.

By the effective compression ratio, which is the effective compression ratio of the compression ignition internal combustion engine, becoming lower, it becomes difficult to invite excessive temperature rise of the combustion chamber due to increase of the amount of the residual gas. Due to this, when the effective compression ratio of the compression ignition internal combustion engine is decreased according to increase of the engine load, it becomes possible to increase the amount of residual gas even if the engine load becomes higher.

Thus, according to the above described concept, it becomes possible to set the predetermined load- to a higher value. By doing this, it is possible further to suppress the amount of NOx which is generated, since it becomes possible to increase the amount of residual gas in the region of higher engine load as well.

According to the fuel injection control system and the fuel injection control method for a compression ignition internal combustion engine according to the present invention, it is possible to stabilize the state of fuel combustion within the combustion chamber of the engine as much as practicable.

### BRIEF DESCRIPTION OF THE DRAWINGS

The features, advantages thereof, and technical and industrial significance of this invention will be better understood by reading the following detailed description of preferred embodiments of the invention, when considered in connection with the accompanying drawings, in which:
Fig. 1 is a figure showing the schematic structure of an internal combustion engine, to which an embodiment of the present invention has been applied;
Fig. 2 is a figure showing the relationship between engine load and engine rotational speed, according to this embodiment of the present invention; and
Fig. 3 is a flow chart of a control routine for valve timing and fuel injection control, according to this embodiment of the present invention.

### DETAILED DESCRIPTION OF THE PREFERRED EMBODIMENTS

In the following description and the accompanying drawings, the present invention will be described in more detail with reference to exemplary embodiments thereof.

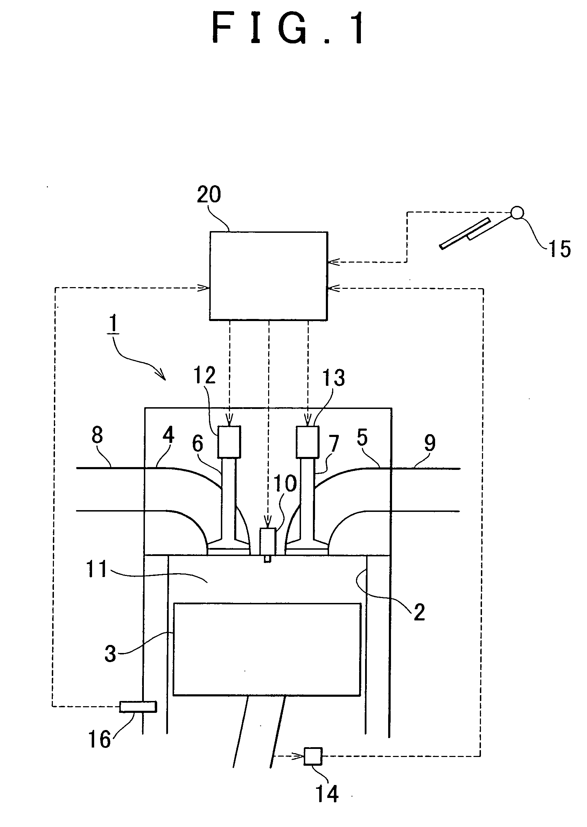

First, as an example of the present invention, an embodiment thereof will be explained. Fig. 1 is a figure showing the schematic structure of a compression ignition internal combustion engine to which an embodiment of the present invention is applied. This internal combustion engine 1 is a compression ignition internal combustion engine for propelling a vehicle. A piston 3 is provided so as to slide up and down within a cylinder 2 of this internal combustion engine 1. Art intake port 4 and an exhaust port 5 open to a combustion chamber 11 in the upper portion of the cylinder 2.

The opening and closing of the portions of the intake port 4 and the exhaust port 5 which open into the combustion chamber 11 is controlled by an intake valve 6 and an exhaust valve 7, respectively. Respective variable valve operating mechanisms 12 and 13 are provided to this intake valve 6 and exhaust valve 7, and control their valve timings.

The intake port 4 and the exhaust port 5 are respectively connected to an intake conduit 8 and an exhaust conduit 9. Furthermore, a fuel injection valve 10 which injects fuel directly into the combustion chamber 11 is fitted to the cylinder 2. To this internal combustion engine 1 which has the above described structure there is provided an ECU 20, which is for controlling this internal combustion engine. To the ECU 20 there are connected, via electrical wiring, a crank position sensor 14 which detects the crank angle of the internal combustion engine 1, an accelerator opening amount sensor 15 which detects the accelerator opening amount of the vehicle to which this internal combustion engine 1 is fitted, and a water temperature sensor 16 which detects the water temperature within a water jacket which is provided to the internal combustion engine 1. The output values from these various sensors are inputted to the ECU 20.

The ECU estimates the rotational speed of the internal combustion engine 1, based upon the value detected by the crank position sensor 14. Furthermore, the ECU 20 estimates the load of the internal combustion engine 1, based on the value detected by the accelerator opening amount sensor 15. Moreover, the ECU 20 estimates the temperature of the internal combustion engine 1, based on the value detected by the water temperature sensor 16.

Yet further, the ECU 20 is connected to the variable valve operating mechanisms 12 and 13, and to the fuel injection valve 10. These various devices are controlled by the ECU 20.

In this embodiment, main fuel injection is performed by the fuel injection valve 10 at a timing in the vicinity of the top dead center on the compression stroke. Furthermore, in order further to elevate the temperature in the combustion chamber 11 during main fuel injection, secondary fuel injection is performed by the fuel injection valve 10 at a timing which is before the above main fuel injection is performed, and at a timing at which the fuel which has been injected is combusted in the combustion chamber 11.

Here, by increasing the number of times at which secondary fuel injection is performed during a single combustion cycle, it is possible to elevate the temperature in the combustion chamber 11 further. By elevating the temperature in the combustion chamber 11, it is possible to prevent the ignition delay time period becoming too long. However, when the number of times of performing secondary fuel injection in a single combustion cycle is increased, the time period for performing secondary fuel injection becomes short. And, when the time period for performing secondary fuel injection becomes too short, the influence of pulsations of the fuel pressure while secondary fuel injection is being performed becomes too great, and in some cases it becomes difficult to control the secondary fuel injection amount with good accuracy.

Here, in this embodiment of the present invention, control is performed in order, while preventing the ignition delay time period from becoming too long, also to keep down the number of times secondary fuel injection is performed in a single combustion cycle. This control will now be explained in the following.

It is possible to increase the amount of residual gas which remains within the combustion chamber 11 after fuel combustion by, along with advancing the timing of closing the exhaust valve 7 by the variable valve operating mechanism 13, also delaying the timing of opening the intake valve 6 by the variable valve operating mechanism 12.

By thus increasing the amount of residual gas, it becomes possible to elevate the temperature within the combustion chamber 11 to a temperature at which it is possible to prevent the ignition delay time period becoming too long, even though the number of times of performing secondary fuel injection within a single combustion cycle is decreased.

For this, in this embodiment, the amount of residual gas is increased by delaying the timing of the opening of the intake valve 6 along with advancing the timing of the closing of the exhaust valve 7 if the engine load is less than or equal to a predetermined load, as compared when the engine load is higher than that predetermined load. Furthermore, the number of times that secondary fuel injection is performed within a single combustion cycle is decreased, as compared when the engine load is higher than the predetermined load.

Here, the predetermined load is a threshold value of load at which it is possible to decide that it is possible to increase the amount of residual gas to an extent that it is possible to elevate the temperature within the combustion chamber 11 to a temperature at which it is possible to prevent the ignition delay time period from becoming too long, even if the number of times that secondary fuel injection is performed within a single combustion cycle is decreased.

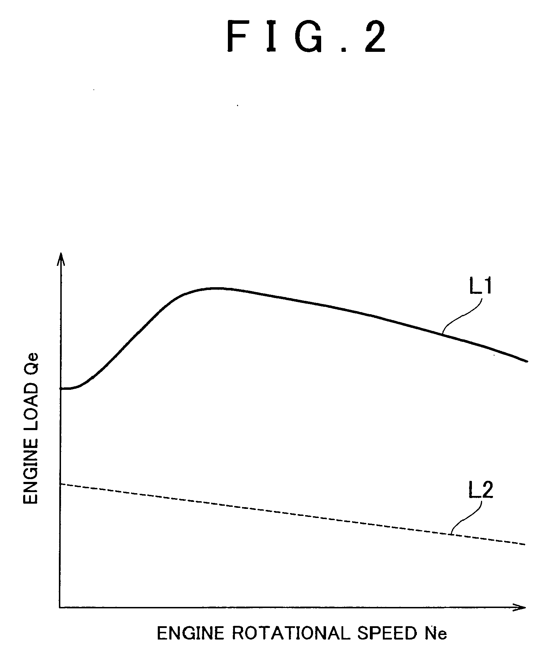

Fig. 2 is a figure showing the relationship, in this embodiment, between the predetermined engine load and the engine rotational speed. In Fig. 2, the engine load *Qe* is shown along the vertical axis, while the engine rotational speed *Ne* is shown along the horizontal axis. Furthermore, the solid line S is a line showing the upper limit value of the engine load *Qe,* while the broken line L2 shows the predetermined load. As shown in Fig. 2, in this embodiment, the predetermined load is determined according to the engine rotational speed.

On the other hand, if the engine load is higher than the predetermined load, then the fuel injection pressure while the main fuel injection is being performed is decreased, as compared to when the engine load is less than or equal to the predetermined load. And the number of times that the secondary fuel injection is performed in a single combustion cycle is reduced as much as possible.

Since the temperature in the combustion chamber is elevated if the engine load is quite high, even if the fuel which is injected from the fuel injection valve 10 is not converted into minute droplets, it becomes easier to atomize the fuel, as compared to when the engine load is low. Accordingly, even if the fuel injection pressure is decreased while the main fuel injection is being performed, it is possible to prevent the ignition delay time period-becoming long. Due to this it is possible to prevent the ignition delay time period becoming too long, even if the temperature in the combustion chamber 11 has been decreased by the number of times secondary fuel injection is performed during a single combustion cycle decreasing. Moreover, if the fuel injection pressure is decreased while the main fuel injection is being performed, it is possible to lengthen the time period for injection; in other words, it is possible to reduce the fuel injection amount per unit time. Due to this, it becomes possible to reduce the combustion noise.

According to the control as described above it is possible, along with preventing the ignition delay time period from becoming too long, also to reduce the number of times that secondary fuel injection is performed during a single combustion cycle as much as possible, whether the load on the engine is less than or equal to the predetermined load, or is higher than the predetermined load. By doing this, it becomes possible to control the secondary fuel injection amount with better accuracy, since it is possible to lengthen the interval between injections of secondary fuel.

Thus, according to this embodiment, it is possible to stabilize the combustion state of fuel in the combustion chamber 11 to the greatest possible extent. Furthermore, if the engine load is less than or equal to the predetermined load, it is possible to suppress the amount of NOx which is generated by increasing the amount of residual gas.

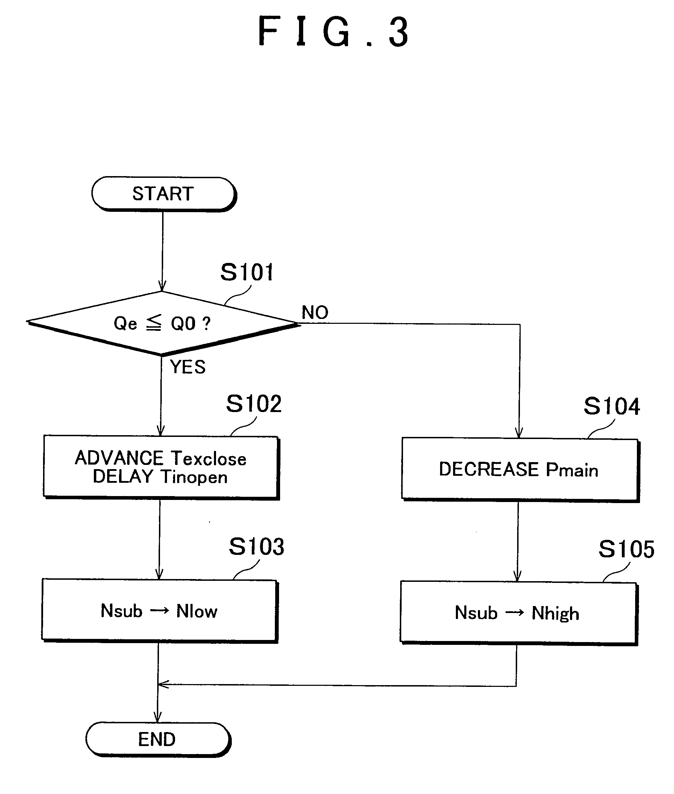

Now, a control routine for valve timing and fuel injection control according to this embodiment will be explained based on the flow chart shown in Fig. 3. This routine is stored in advance in the ECU 20, and is executed at predetermined intervals.

In this routine, first, in a step S101, the ECU 20 decides whether or not the engine load *Qe* is less than or equal to the predetermined load Q0. If a positive decision is reached in this step S101, then the ECU proceeds to the next step S102, while if a negative decision is reached, then the ECU jumps to a step S 104.

In the step S102, the ECU 20 advances the timing of closing *Texclose* of the exhaust valve 7 and moreover delays the timing of opening *Tinopen* of the intake valve 6, respectively ahead and behind of their values when the engine load *Qe* is higher than the predetermined load *Q0.* Due to this, the amount of residual gas becomes greater, than when the engine load *Qe* is higher than the predetermined load *Q0.*

Next the ECU 20 proceeds to the step S103, in which it controls the number of times *Nsub* that secondary fuel injection is performed during a single combustion cycle to be a predetermined number of times during low load *Nlow.* This number of times during low load *Nlow* is a number of times which is smaller than a predetermined number of times during high load *Nhigh* that secondary fuel injection is performed during a single combustion cycle, when the engine load *Qe* is greater than the predetermined load. Thereafter, the ECU 20 terminates the execution of this routine for the time being.

On the other hand, if the ECU 20 has jumped to the step S104, then it decreases the fuel injection pressure *Pmain* during the performance of main fuel injection to a value which is lower than its value when the engine load *Qe* is less than or equal to the predetermined load *Q0.* Due to this, the fuel injection period during main fuel injection becomes longer.

Next, the ECU 20 proceeds to the step S 105, in which it controls the number of times *Nsub* that secondary fuel injection is performed during a single combustion cycle to be the predetermined number of times during high load *Nhigh.* And thereafter the ECU 20 terminates the execution of this routine for the time being.

It should be understood that the predetermined number of times Nlow during low load *Nlow* and the predetermined number of times during high load *Nhigh* are both a number of times for which it is possible to prevent the interval between injections of secondary fuel from becoming too short.

Furthermore, the advance amount of the timing of closing *Texclose* of the exhaust valve 7 and the delay amount of the timing of opening *Tinopen* of the intake valve 6 are determined so that the amount of residual gas becomes an amount at which it is possible to prevent the temperature within the combustion chamber 11 decreasing too much, even if the number of times *Nsub* that secondary fuel injection is performed during a single combustion cycle is controlled to be the predetermined number of times during low load *Nlow.* The advance amount of the timing of closing *Texclose* of the exhaust valve 7 and the delay amount of the timing of opening *Tinopen* of the intake valve 6 may be determined according to the engine load.

Furthermore, the amount of decrease in the step S104 of the fuel injection pressure *Pmain* when main fuel injection is being performed is determined so that the period of fuel injection when main fuel injection is being performed becomes a time period at which it is possible to prevent the ignition delay time period from becoming too long, even if the number of times *Nsub* that secondary fuel injection is performed during a single combustion cycle is controlled to be the predetermined number of times during high load *Nhigh.* The amount of decrease of the fuel injection pressure *Pmain* when main fuel injection is being performed may be determined according to engine load, just as above.

Next, a first variant embodiment of this embodiment will be explained. It is also possible further to increase the temperature in the combustion chamber 11 when main fuel injection is being performed by increasing the fuel injection amount per one time of secondary fuel injection. For this, in this variant embodiment, if the engine load is higher than a predetermined load, the fuel injection amount per one time of secondary fuel injection is increased to be greater than when the engine load is less than or equal to that predetermined load, and thereby, along with suppressing the increase of the temperature within the combustion chamber 11, the number of times of secondary fuel injection may also be decreased.

Furthermore, a second variant embodiment of this embodiment will now be explained. It should be understood that, the lower is the engine temperature of the internal combustion engine 1, the more difficult does it become to invite excessive rise of the temperature in the combustion chamber 11 due to increasing the amount of residual gas. Thus, in this embodiment, if the engine temperature is less than or equal to a predetermined temperature, the predetermined load may be set to a higher value, as compared with when the engine temperature is higher than the predetermined temperature.

By doing this, the amount of residual gas is increased in a region of higher engine load as well. Due to this, it is possible to suppress the amount of generation of NOx.

Furthermore, yet a third variant embodiment of this embodiment will now be explained. It should be understood that it is possible to make it difficult to invite excessive rise of the temperature within the combustion chamber 11 due to increase of the amount of residual gas, by decreasing the effective compression ratio of the internal combustion engine 1. Thus, in this embodiment, the timing of the closing of the intake valve 6 is delayed according to increase of the engine load.

By delaying the timing of closing of the intake valve 6, the effective compression ratio of the internal combustion engine 1 is decreased. In other words, according to the procedure described above, the effective compression ratio of the internal combustion engine 1 is decreased according to increase of the engine load.

Moreover, in this case, the predetermined load is set to a higher value, according to the decrease of the effective compression ratio of the internal combustion engine 1. Due to this, the amount of residual gas comes to be increased also in a region in which the engine load is higher, just as described previously. Thus, it becomes possible to suppress the amount of NOx which is generated.

## Claims

1. A fuel injection control system for a compression ignition internal combustion engine which performs, using a fuel injection valve (10) which injects fuel directly into a combustion chamber (11), main fuel injection, and secondary fuel injection, which is performed before said main fuel injection is performed and at a timing at which fuel of the secondary fuel injection will burn in said combustion chamber (11); **characterized by** comprising:
a residual gas amount control means that controls the amount of residual gas which remains within the cylinder (2) after fuel combustion, wherein
said residual gas amount control means: if the load (*Qe*) upon said compression ignition internal combustion engine (1) is less than or equal to a predetermined load (*Q0*), then, along with increasing (S 102) the remaining gas amount, decreases (S 103) the number of times secondary fuel injection is performed in a single combustion cycle (*Nsub*), as compared with when said load (*Qe*) upon said compression ignition internal combustion engine (1) is higher than said predetermined load (*Q0*).

2. A fuel injection control system for a compression ignition internal combustion engine according to Claim 1, **characterized in that**
said residual gas amount control means, if the load (*Qe*) on said compression ignition internal combustion engine (1) is less than or equal to said predetermined load (*Q0*), increases said residual gas amount by, along with advancing (S102) the timing of closing of an exhaust valve (7), also delaying (S 102) the timing of opening of an intake valve (6), as compared with when said load (*Qe*) upon said compression ignition internal combustion engine (1) is higher than said predetermined load (*Q0*).

3. A fuel injection control system for a compression ignition internal combustion engine according to Claim 1 or Claim 2, **characterized in that**
said residual gas amount control means, if the load (*Qe*) on said compression ignition internal combustion engine (1) is higher than said predetermined load (*Q0*), decreases (S104) the fuel injection pressure (*Pmain*) during the performance of main fuel injection, as compared with when said load (*Qe*) upon said compression ignition internal combustion engine (1) is less than or equal to said predetermined load (*Q0*).

4. A fuel injection control system for a compression ignition internal combustion engine according to Claim 1 or Claim 2, **characterized in that**
said residual gas amount control means, if the load (*Qe*) on said compression ignition internal combustion engine (1) is higher than said predetermined load (*Q0*), increases the fuel injection amount per one time of secondary fuel injection, as compared with when said load (*Qe*) upon said compression ignition internal combustion engine (1) is less than or equal to said predetermined load (*Q0*).

5. A fuel injection control system for a compression ignition internal combustion engine according to any one of Claims 1 through 4, **characterized in that**
said residual gas amount control means, if the temperature of said compression ignition internal combustion engine (1) is less than or equal to a predetermined temperature, sets said predetermined load (*Q0*) to a higher value, as compared with when said temperature of said compression ignition internal combustion engine (1) is greater than said predetermined temperature.

6. A fuel injection control system for a compression ignition internal combustion engine according to any one of Claims 1 through 5, **characterized** further comprising:
an effective compression ratio control means which decreases an effective compression ratio of said compression ignition internal combustion engine (1), according to increase of the load upon said compression ignition internal combustion engine (1).

7. A fuel injection control method for a compression ignition internal combustion engine which performs, using a fuel injection valve (10) which injects fuel directly into a combustion chamber (11), main fuel injection, and secondary fuel injection, which is performed before said main fuel injection is performed and at a timing at which fuel of the secondary fuel injection will burn in said combustion chamber (11); **characterized in that**
if the load (*Qe*) upon said compression ignition internal combustion engine (1) is less than or equal to a predetermined load (*Q0*), then, along with increasing (S102) the remaining gas amount which remains within the cylinder (2) after fuel combustion, the number of times secondary fuel injection is performed in a single combustion cycle is decreased (S103), as compared with when said load (*Qe*) upon said compression ignition internal combustion engine (1) is higher than said predetermined load (*Q0*).

8. A fuel injection control method according to Claim 7, **characterized in that**
if the load (*Qe*) on said compression ignition internal combustion engine (1) is less than or equal to said predetermined load (*Q0*), said residual gas amount is increased by, along with advancing (S 102) the timing of closing of an exhaust valve (7), also delaying (S102) the timing of opening of an intake valve (6), as compared with when said load (*Qe*) upon said compression ignition internal combustion engine (1) is higher than said predetermined load (*Q0*).

9. A fuel injection control method according to Claim 7 or Claim 8, **characterized in that**
if the load (*Qe*) on said compression ignition internal combustion engine (1) is higher than said predetermined load (*Q0*), the fuel injection pressure (*Pmain*) during the performance of main fuel injection is decreased (S104), as compared with when said load (*Qe*) upon said compression ignition internal combustion engine (1) is less than or equal to said predetermined load (*Q0*).

10. A fuel injection control method according to Claim 7 or Claim 8, **characterized in that**
if the load (*Qe*) on said compression ignition internal combustion engine (1) is higher than said predetermined load (*Q0*), the fuel injection amount per one time of secondary fuel injection is increased, as compared with when said load (*Qe*) upon said compression ignition internal combustion engine (1) is less than or equal to said predetermined load (*Q0*).

11. A fuel injection control method according to any one of Claims 7 through 10, **characterized in that**
if the temperature of said compression ignition internal combustion engine (1) is less than or equal to a predetermined temperature, said predetermined load (*Q0*) is set to a higher value, as compared with when said temperature of said compression ignition internal combustion engine (1) is greater than said predetermined temperature.

12. A fuel injection control method according to any one of Claims 7 through 11, **characterized in that**
an effective compression ratio of said compression ignition internal combustion engine (1) is decreased, according to increase of the load upon said compression ignition internal combustion engine (1).
